# EUROPEAN PATENT APPLICATION

(11) **EP 4 837 710 A1**
(43) Date of publication of application: **11.11.2026**
(21) Application number: 26153922.5
(22) Date of filing: 23.01.2026
(51) Int. Cl.: B25J 15/00, B25J 15/10

(54) **SYSTEMS FOR PICKING AND PLACING HONEYCOMB CORES AND RELATED ASSEMBLIES, ROBOTIC SYSTEMS, AND METHODS**

(30) Priority: 08.05.2025 US 202519202357
(71) Applicant: The Boeing Company, Arlington, VA 22202 (US)
(72) Inventor: PARALUCH, Jackson D., Arlington, 22202 (US); ZUBIN, Claudio, Arlington, 22202 (US)
(74) Representative: Morrall, Jonathan Ian McLachlan

(57) **Abstract**

Systems comprise a first-pin support, first pins slidably received within first-pin bores of the first-pin support, a second-pin support, and second pins slidably received within second-bin bores of the second-pin support. The first-pin support and the second-pin support are configured to be selectively moved relative to each other perpendicular to the longitudinal axes of the first pins and the second pins, so that when at least a subset of the first pins and the second pins extend into cells of a honeycomb core, the subset operatively engages the cell walls of the honeycomb core for movement of the honeycomb core by the system.

## Description

### FIELD

The present disclosure relates to picking and placing honeycomb cores.

### BACKGROUND

Honeycomb core, due to its high strength-to-weight ratio, is an ideal structure for aerospace applications. Honeycomb core is a structural material usually defined by an array of hollow, generally columnar cells formed by thin vertical walls. The cells usually have a hexagonal cross-section, and thus an array of such cells have the geometry of a honeycomb. Although some forms of honeycomb core are provided with the cellular array disposed between two panels, in other forms the cells are open on one or both ends. These configurations may make sections of honeycomb core difficult to handle, particularly with traditional grippers, including robotic grippers.

### SUMMARY

Systems for picking and placing honeycomb cores and related end effectors, robotic systems, and methods are disclosed.

Systems for picking and placing honeycomb core comprise at least a first-pin support, first pins, a second-pin support, and second pins. The first-pic support has a first-pin-support lower side and defines first-pin bores. The first pins are received within respective ones of the first-pin bores, define first-pin longitudinal axes that are parallel to each other, are sized to extend into respective cells of a honeycomb core, and are configured to slidably translate within the respective ones of the first-pin bores. The second-pin support has a second-pin-support lower side and defines second-pin bores. The second pins are received within respective ones of the second-pin bores, define second-pin longitudinal axes that are parallel to the first-pin longitudinal axes, are sized to extend into respective ones of the cells pf the honeycomb core, and are configured to slidably translate within the respective ones of the second-pin bores. At least one of the first-pin support or the second-pin support is configured to be selectively moved relative to the other of the first-pin support or the second-pin support in one or more directions perpendicular to the first-pin longitudinal axes and the second-pin longitudinal axes, so that subsets of the first pins and the second pins engage cell walls of the honeycomb core, enabling the honeycomb core to be moved.

### BRIEF DESCRIPTION OF THE DRAWINGS

Fig. 1 is a schematic illustration representing systems according to the present disclosure.
Fig. 2 is a schematic illustration representing example systems according to the present disclosure.
Fig. 3 is a schematic illustration representing example systems according to the present disclosure.
Fig. 4 is an isometric view of an example system according to the present disclosure.
Fig. 5 is an isometric view of another example system according to the present disclosure.
Fig. 6 is a cross-sectional isometric view of a portion of the example system of Fig. 5.
Fig. 7 is an isometric view of another example system according to the present disclosure.
Fig. 8 is a flow chart schematically representing methods according to the present disclosure.
Figs. 9A-9F schematically represent methods according to the present disclosure.

### DESCRIPTION

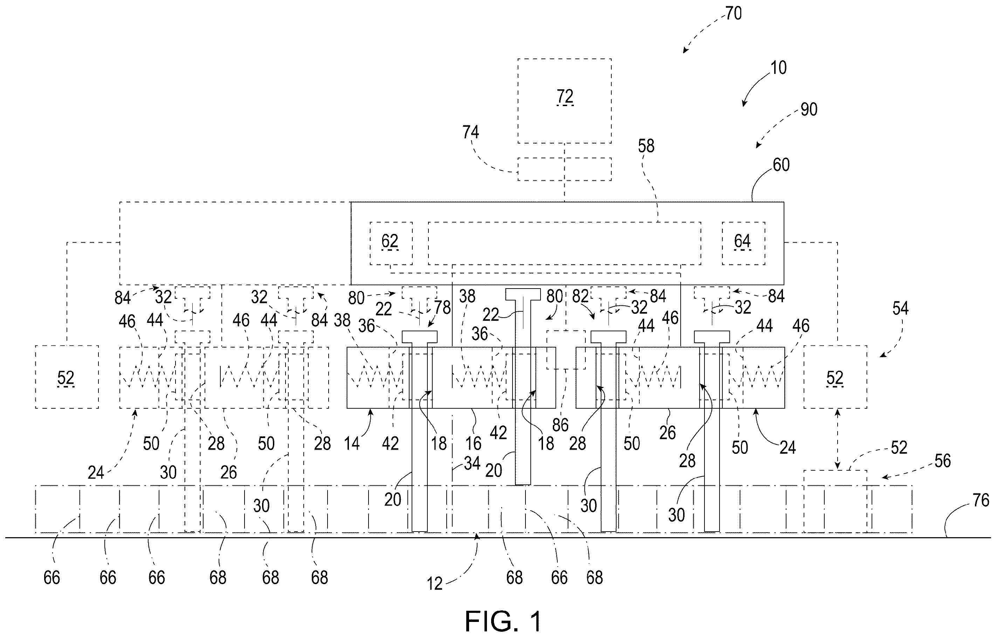

Fig. 1 schematically represents systems 10 for picking and placing honeycomb core 12 according to the present disclosure. Generally, in Fig. 1, elements that are likely to be included in a given example are illustrated in solid lines, while elements that are optional to a given example or that correspond to one or more specific examples are illustrated in broken lines. However, elements that are illustrated in solid lines are not essential to all examples of the present disclosure, and an element shown in solid lines may be omitted from a particular example without departing from the scope of the present disclosure.

Honeycomb cores 12 are structural assemblies often used in the aerospace industry due to the high strength-to-weight ratio. Honeycomb cores 12 comprise cell walls 66 that define cells 68, and may be constructed of various materials depending on the specific applications of the honeycomb cores 12.

As schematically represented in Fig. 1, systems 10 comprise at least a frame 60, a first-pin support 14, first pins 20, a second-pin support 24, and second pins 30.

The first-pin support 14 is operatively supported by the frame 60, has a first-pin-support lower side 16, and defines first-pin bores 18. The first pins 20 are received within respective ones of the first-pin bores 18, which define first-pin longitudinal axes 22 that are parallel to each other. The first pins 20 are sized to extend into respective ones of the cells 68 of a honeycomb core 12.

The first pins 20 are configured to slidably translate within the respective ones of the first-pin bores 18 along the first-pin longitudinal axes 22 between first-pin extended positions 78 and ranges of first-pin retracted positions 80. In the first-pin extended positions 78, the first pins 20 extend from the first-pin-support lower side 16. In the first-pin retracted positions 80, less of the first pins 20 extend from the first-pin-support lower side 16.

The second-pin support 24 is operatively supported by the frame 60, has a second-pin-support lower side 26, and defines second-pin bores 28. The second pins 30 are received within respective ones of the second-pin bores 28, which define second-pin longitudinal axes 32 that are parallel to each other. The second pins 30 are sized to extend into respective ones of the cells 68 of a honeycomb core 12.

The second pins 30 are configured to slidably translate within the respective ones of the second-pin bores 28 along the second-pin longitudinal axes 32 between second-pin extended positions 82 and ranges of second-pin retracted positions 84. In the second-pin extended positions 82, the second pins 30 extend from the second-pin-support lower side 26. In the second-pin retracted positions 84, less of the second pins 30 extend from the second-pin-support lower side 26.

In some examples, the second-pin-support lower side 26 is coplanar with the first-pin-support lower side 16.

Herein, the pins (i.e., the first pins 20 and the second pins 30) being sized to extend into cells 68 means that the pins are sufficiently small laterally (e.g., their diameter) to extend into a wide array of honeycomb core 12 structures of varying cell sizes. However, it is within the present scope of this disclosure that the pins may be of any appropriate size to accommodate varying cell sizes. Moreover, specific examples may be configured so that differently-sized pins may be installed if desired.

The pins (i.e., the first pins 20 and the second pins 30) may be constructed of any suitable material, including metals or plastics, such that they are operatively rigid and will not detrimentally bend in response to engagement with the cell walls 66 of honeycomb cores 12 when systems 10 are operatively used to pick and place honeycomb cores 12, as described herein. The lateral sides of the pins 20 frictionally engage with the cell walls 66 of the honeycomb cores 12 when a system 10 is operatively used. This frictional interface may be based on the material of the honeycomb core, as well as by the material selection of the pins 20 and/or by the texture on the lateral sides of the pins. That is, the pins 20 may be provided with a suitable texture to meet a minimum frictional threshold needed for operative engagement with the cell walls 66 for movement of the honeycomb cores 12.

At least one of the first-pin support 14 or the second-pin support 24 is configured to be selectively moved relative to the other of the first-pin support 14 or the second-pin support 24 in one or more directions perpendicular to the first-pin longitudinal axes 22 and the second-pin longitudinal axes 32. In doing so, the system 10 transitions from a nominal position to an engagement position. Thus, if one or more pins have been extended into the cells 68 of a honeycomb core 12, this movement of the pin supports 14, 24 will correspondingly move the pins within the cells 68 laterally relative to the cells 68 so that the pins will engage the cell walls 66, thereby establishing a collective grip of the honeycomb core 12 by means of one or more pins of each of the pin supports engaging multiple cell walls 66. In the engagement position, a first subset of the first pins 20 and a second subset of the second pins 30 engage the cells walls 66, establishing a grip of the honeycomb core 12 with the system 10. Accordingly, the honeycomb core 12 can then be moved and positioned with the system 10.

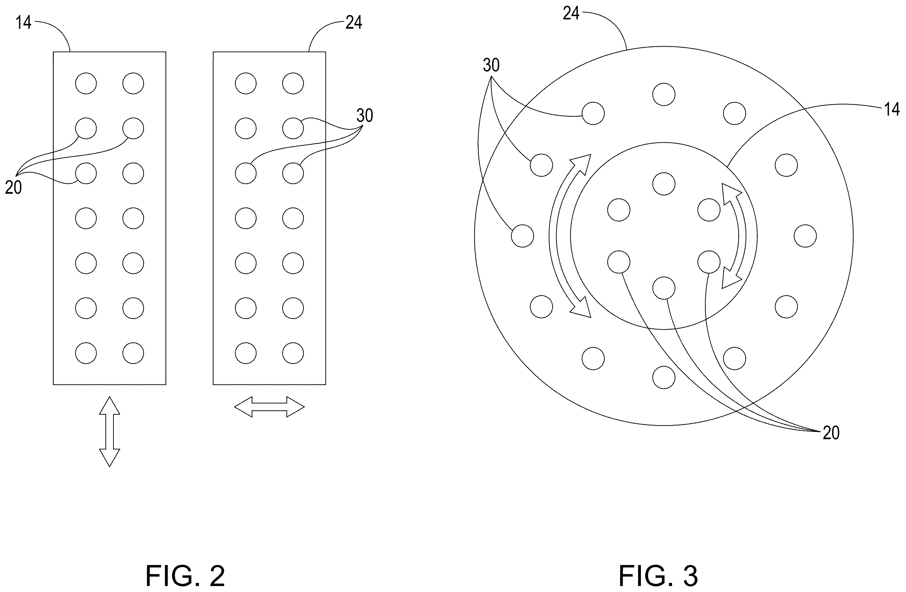

In some examples, at least one of the first-pin support 14 or the second-pin support 24 is configured to be selectively and linearly moved relative to the other of the first-pin support 14 or the second-pin support 24 perpendicular to the first-pin longitudinal axes 22 and the second-pin longitudinal axes 32, such as schematically represented in Fig. 2. In other examples, at least one of the first-pin support 14 or the second-pin support 24 is configured to be selectively rotated relative to the other of the first-pin support 14 or the second-pin support 24 about a rotation axis 34 that is parallel to the first-pin longitudinal axes 22 and the second-pin longitudinal axes 32, such as schematically represented in Fig. 3. In some such examples, the second-pin support 24 extends at least partially or fully around the first-pin support 14, such that rotation of one of the second-pin support 24 rotates around the first-pin support 14 and/or the first-pin support 14 rotates within the second-pin support 24.

In some examples, as schematically represented in Fig. 1, end effectors 90 further comprise an actuator 58 that is supported by the frame 60. The actuator 58 is configured to move at least one of the first-pin support 14 or the second-pin support 24 relative to the other of the first-pin support 14 or the second-pin support 24 in one or more directions perpendicular to the first-pin longitudinal axes 22 and the second-pin longitudinal axes 32. In some examples, the actuator 58 is a linear actuator. Accordingly, in such examples, the linear actuator is configured to selectively and linearly move at least one of the first-pin support 14 or the second-pin support 24 relative the other of the first-pin support 14 or the second-pin support 24 perpendicular to the first-pin longitudinal axes 22 and the second-pin longitudinal axes 32. In some further examples, the actuator 58 is a rotary actuator. Accordingly, in such examples, the actuator 58 is configured to selectively rotate at least one of the first-pin support 14 or the second-pin support 24 relative to the other of the first-pin support 14 or the second-pin support 24 about a rotation axis 34 that is parallel to the first-pin longitudinal axes 22 and the second-pin longitudinal axes 32. As illustrative non-exclusive examples, the actuator 58 may comprise one or more of a pneumatic actuator, an electric actuator, a hydraulic actuator, a spring-driven actuator, etc.

As is evident from the above description, moving the first-pin support 14 and the second-pin support 24 relative to each other correspondingly moves the first pins 20 and second pins 30 relative to each other. Thus, as explained in greater detail below, lowering the system 10 relative to a section of honeycomb core 12 having its cells 68 oriented to align with the longitudinal axes of the first and second pins will result in some of the pins descending into some of the cells 68, while other pins will encounter the tops of the cell walls 66, as shown in Fig. 1. At this point, moving the first-pin support 14 relative to the second-pin support 24 will cause those of the first and second pins that have descended into the cells 68 to move laterally and contact the cell walls 66. Accordingly, because the first and second pins are moved in different directions, those that have moved into the cells 68 collectively establish a grip of the honeycomb core 12 by means of the contact with multiple cell walls.

In some examples, as schematically represented in Fig. 1, the system 10 further comprises a force sensor 62 that is operatively supported by the frame 60. The force sensor 62 is configured to sense a reaction force on the first-pin support 14 and/or on the second-pin support 24 from engagement of the subset of the first pins 20 and/or the second pins 30 with the cell walls 66. In response to the reaction force meeting a threshold, the actuator 58 is configured to cease movement of the first-pin support 14 and/or the second-pin support 24 relative to the other of the first-pin support 14 or the second-pin support 24. In such examples, the threshold force may be defined as being less than the force required to permanently deform the cell walls 66. Said another way, the threshold force is less than or equal to the yield strength of the cell walls 66. In some examples, the force sensor 62 comprises a torque sensor. As illustrative non-exclusive examples, the force sensor 62 may comprise one or more of a strain gauge load cell, a piezoelectric force sensor, a magnetic force sensor, a piezoresistive force sensor, a resonant force sensor, etc.

In some examples, as schematically represented in Fig. 1, the first-pin bores 18 define first-pin slots 36 that extend perpendicular to the first-pin longitudinal axes 22. In such examples, the first pins 20 are configured to translate laterally within respective ones of the first-pin slots 36 perpendicular to the first-pin longitudinal axes 22. In some such examples, the first pins 20 are laterally biased within the respective ones of the first-pin slots 36 perpendicular to the first-pin longitudinal axes 22.

In some of such examples, the system 10 further comprises first-pin springs 38. The first-pin springs 38 are operatively supported by the first-pin support 14 and are configured to bias the first pins 20 in a first direction within the respective ones of the first-pin slots 36. The first-pin springs 38 serve to increase the number of the first pins 20 engaging the cell walls 66 and evenly distribute the load among the first subset of the first pins 20 engaging the cell walls 66. In other words, the first-pin springs 38 may allow for a greater extent of relative movement of the first-pin and second-pin supports than may otherwise be achieved if, for example, this movement is stopped at the point at which one or more pins first contacts one or more cell walls 66. Rather, the springs may allow a greater amount of pins to contact corresponding cell walls 66 as the supports continue to move relative to each other, which may enhance the grip achieved between the pins and the honeycomb core 12. The first direction may be defined as a direction that is at least substantially opposite the direction of a force applied to the first pins 20 in response to the first-pin support 14 selectively moving relative to the second-pin support 24 perpendicular to the first-pin longitudinal axis 22. As illustrative non-exclusive examples, the first-pin springs 38 may comprise one or more of a wire spring, an oil spring, a gas spring, or any suitably elastic material.

Additionally, in some such examples, systems 10 further comprise first-pin sleeves 42. The first-pin sleeves 42 are operatively supported by the first-pin support 14, and the first pins 20 extend through and are configured to slide within respective ones of the first-pin sleeves 42. In such examples, respective ones of the first-pin springs 38 engage the respective ones of the first-pin sleeves 42. Accordingly, the first-pin springs 38 do not directly engage the first pins 20, and the first pins 20 are thus able to freely translate longitudinally within the first-pin sleeves 42, and thus within the first-pin bores 18.

In some examples, as schematically represented in Fig 1, the second-pin bores 28 of the system 10 similarly define second-pin slots 44 that extend perpendicular to the second-pin longitudinal axes 32. In such examples, the second pins 30 are configured to translate laterally within respective ones of the second-pin slots 44 perpendicular to the second-pin longitudinal axes 32. In some such examples, the second pins 30 are laterally biased within the respective ones of the second-pin slots 44 perpendicular to the second-pin longitudinal axes 32.

Additionally, in some such examples, the system 10 further comprises second-pin springs 46. The second-pin springs 46 are operatively supported by the second-pin support 24 and are configured to bias the second pins 30 in a second direction within the respective ones of the second-pin slots 44. The second direction may be described as being opposite the first direction. However, the directions may not be exactly opposite each other and may be linearly opposite each other, generally linearly opposite each other, radially (e.g., circularly) opposite each other, or generally radially opposite each other. For example, in examples where the second-pin support 24 is configured to rotate about the first-pin support 14, the tangents of first and second directions relative to the rotation axis 34 may be radially opposite each other.

As briefly noted above, the second-pin springs 46 serve to increase the number of the second pins 30 engaging the cell walls 66, and also evenly distribute the load among the second subset of the second pins 30 engaging the cell walls 66. The second direction may be defined as a direction that is at least substantially opposite the direction of a force applied to the second pins 30 in response to the second-pin support 24 selectively moving relative to the first-pin support 14 perpendicular to the second-pin longitudinal axis 32. As illustrative non-exclusive examples, the second-pin springs 46 may comprise one or more of a wire spring, an oil spring, a gas spring, or any suitably elastic material.

Additionally, in some such examples, systems 10 further comprise second-pin sleeves 50. The second-pin sleeves 50 are operatively supported by the second-pin support 24. The second pins 30 extend through and are configured to slide within respective ones of the second-pin sleeves 50. In such examples, respective ones of the second-pin springs 46 engage the respective ones of the second-pin sleeves 50. Accordingly, the second-pin springs 46 do not directly engage the second pins 30, and the second pins 30 are thus able to freely translate longitudinally within the second-pin sleeves 50, and thus within the second-pin bores 28.

In some examples, as schematically represented in Fig 1, systems 10 further comprise an ejector structure 52 that is operatively supported by the frame 60 and that is configured to selectively translate between a retracted position 54 and an extended position 56. In the retracted position 54, the ejector structure 52 does not extend beyond the first-pin-support lower side 16 and the second-pin-support lower side 26. In the extended position 56, the ejector structure 52 extends beyond the first-pin-support lower side 16 and the second-pin-support lower side 26. In some further examples, the ejector structure 52 extends around the second-pin support 24 or at least partially around the second-pin support 24. As illustrative non-exclusive examples, the ejector structure 52 may be pneumatically actuated, electrically actuated, spring-driven, etc.

The ejector structure 52, when present, aids moving the system 10 away from the honeycomb core 12 after it has been appropriately positioned by the end effector, without undesirable further movement of the honeycomb core 12. That is, once the honeycomb core 12 has been moved to a desired location by the system 10, and once the first and second support structures, and thus the first and second pins, have been returned to a neutral position relative to each other, engagement of the honeycomb core 12 with the ejector structure 52 permits the remainder of the system 10 to be moved away from the honeycomb core 12 without any of the first pins 20 or the second pins 30 frictionally pulling the honeycomb core 12 away from its intended position.

In some examples, the first pins 20 and second pins 30 of the system 10 are not spring-biased along the respective first-pin longitudinal axes 22 and the respective second-pin longitudinal axes 32. Accordingly, in such examples, system 10 rely entirely on gravity for at least a subset of the first pins 20 and at least a subset of the second pins 30 to operatively enter the cells 68 of a honeycomb core 12, with the cell walls 66 potentially engaging a distinct subset of the first pins 20 and a distinct set of the second pins 30 to prevent those pins from entering the cells 68. By not being spring-biased along their respective longitudinal axes, the pins that engage the cell walls 66 will not damage the cell walls 66.

In some examples, as schematically represented in Fig 1, systems 10 further comprise a position sensor 64 that is operatively supported by the frame 60 and that is configured to detect a position of the system 10 relative to the honeycomb core 12. Accordingly, such systems 10 are configured to be moved relative to the honeycomb core 12 responsive to the position detected by the position sensor 64. As illustrative non-exclusive examples, the position sensor 64 may comprise a camera, a linear variable differential transformer sensor, a potentiometer sensor, a hall effect sensor, etc.

In some examples, as schematically represented in Fig. 1, systems 10 further comprise a force sensor 86 that is operatively supported by the frame 60 and that is configured to sense a reaction force on the first-pin support 14 and/or on the second-pin support 24 from engagement of the honeycomb core 12. In such examples, systems 10 are configured to cease translation toward the honeycomb core 12 in response to the reaction force meeting a threshold. As illustrative non-exclusive examples, the force sensor 86 may comprise one or more of a strain gauge load cell, a piezoelectric force sensor, a magnetic force sensor, a piezoresistive force sensor, a resonant force sensor, etc. In such examples, the threshold force may be selected to ensure that the honeycomb core 12 is not damaged when being operatively placed by the system 10.

In some examples, systems 10 may be configured as end effectors 90 for use with robotic systems 70, which also are within the scope of the present disclosure. As schematically represented in Fig. 1, robotic systems 70 comprise a robotic manipulator 72 operatively coupled to system 10 configured as an end effector 90. That is, an end effector 90 may be configured to be operatively coupled to a robotic manipulator 72, such as with the frame 60 comprising a standard bolt pattern or other structure for operative attachment to a robotic manipulator 72. As illustrative non-exclusive examples, the robotic manipulator 72 may comprise one or more of a robotic arm, a gantry robotic system, or any other robotic system.

In some examples, as schematically represented in Fig. 1, robotic systems 70 further comprise a force feedback module 74 that is operatively coupled to the end effector 90 and that is configured to detect and limit a force applied to the honeycomb core 12 between the robotic manipulator 72 and a structure 76 against which the honeycomb core 12 is positioned.

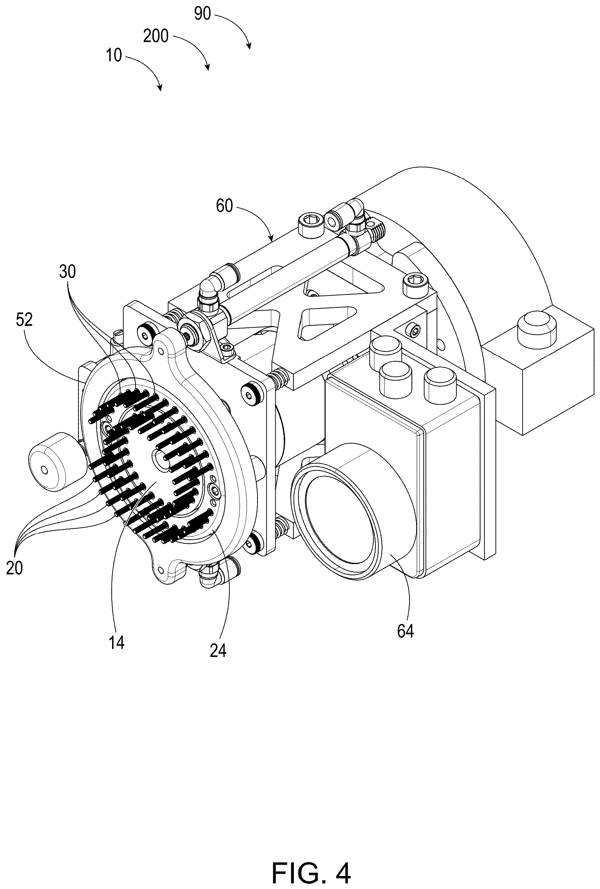

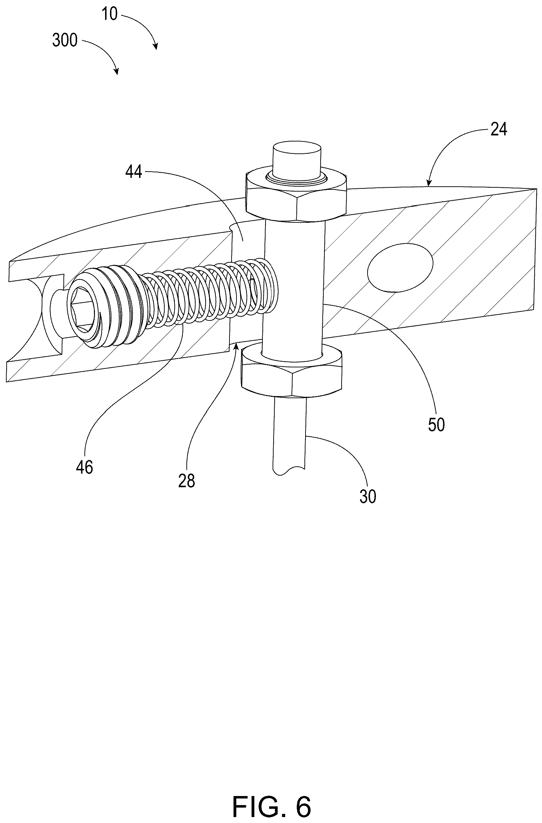

Turning now to Figs. 4-7, illustrative non-exclusive examples of systems 10 are illustrated. Where appropriate, the reference numerals from the schematic illustration of Figs. 1-3 are used to designate corresponding parts of example systems 10 of Figs. 4-7; however, the examples of Figs. 6-7 are non-exclusive and do not limit systems 10 to the illustrated embodiments of Figs. 4-7. That is, systems 10 are not limited to the specific embodiments of the illustrated systems 10, and systems 10 may incorporate any number of the various aspects, configurations, characteristics, properties, etc. of systems 10 that are illustrated in and discussed with reference to the schematic representation of Figs. 1-3 and/or the embodiments of Figs. 6-7, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the systems 10 of Figs. 4-7; however, it is within the scope of the present disclosure that the previously discussed features, variants, etc. may be utilized with the examples of Figs. 4-7.

As seen in Fig. 4, the end effector 200 is an example of a system 10 in the form of an end effector 90. The end effector 200 comprises a first-pin support 14 and a second-pin support 24 that are configured to rotate relative to each other. The end effector 200 further comprises an ejector structure 52 that extends around the second-pin support 24, and a position sensor 64 in the form of a camera.

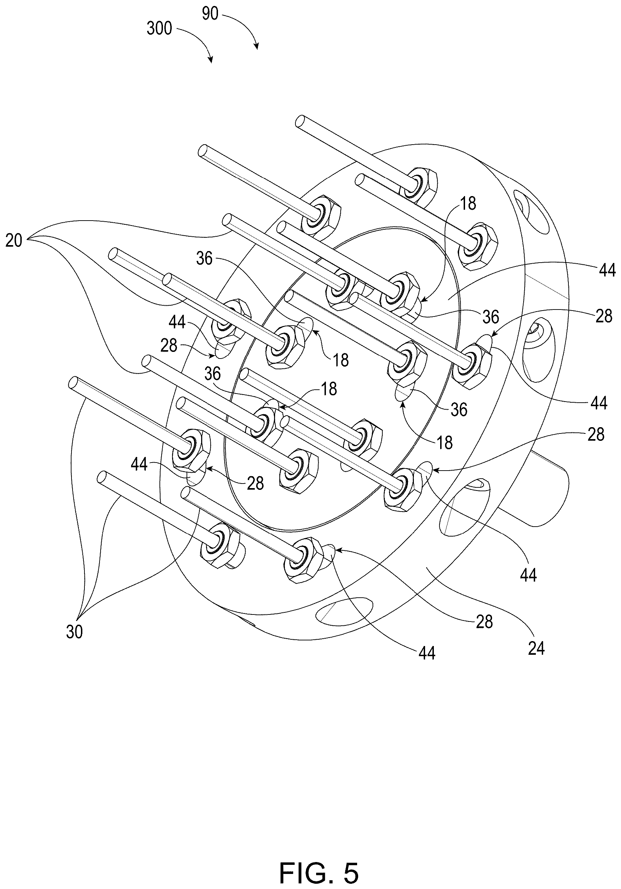

As seen in Fig. 5, system 300 is an example of a system 10, in which the first-pin bores 18 define first-pin slots 36 and the second-pin bores 28 define second-pin slots 44. As seen in Fig 6, the system 300 further comprises second-pin sleeves 50 and second-pin springs 46 engaged with the second-pin sleeves 50. While not depicted, the system 300 further comprises first-pin sleeves 42 and first-pin springs 38 that engage the first-pin sleeves 42.

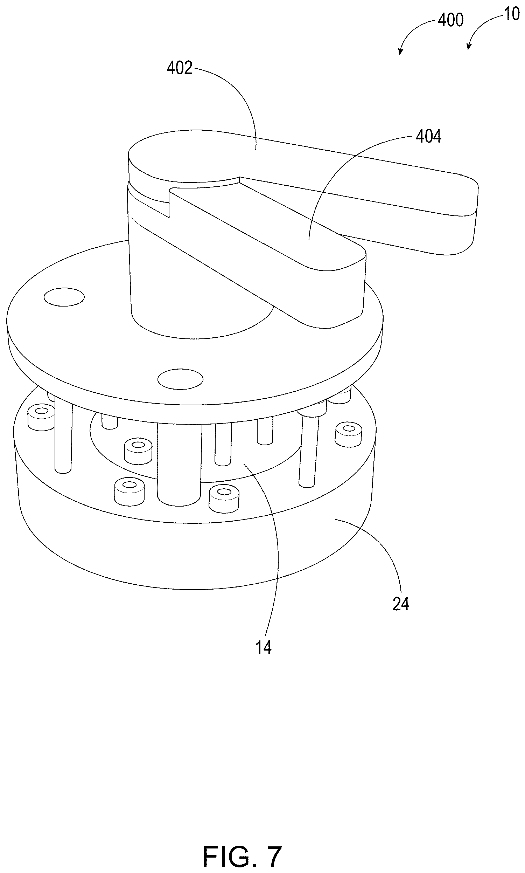

System 400, illustrated in Fig. 7, is an example of a system 10 that is configured for manual operation. Specifically, system 400 comprises a first handle 402 associated with and configured to operatively rotate the first-pin support 14 relative to the second-pin support 24, and a second handle 404 associated with and configured to operatively rotate the second-pin support 24 relative to the first-pin support 14.

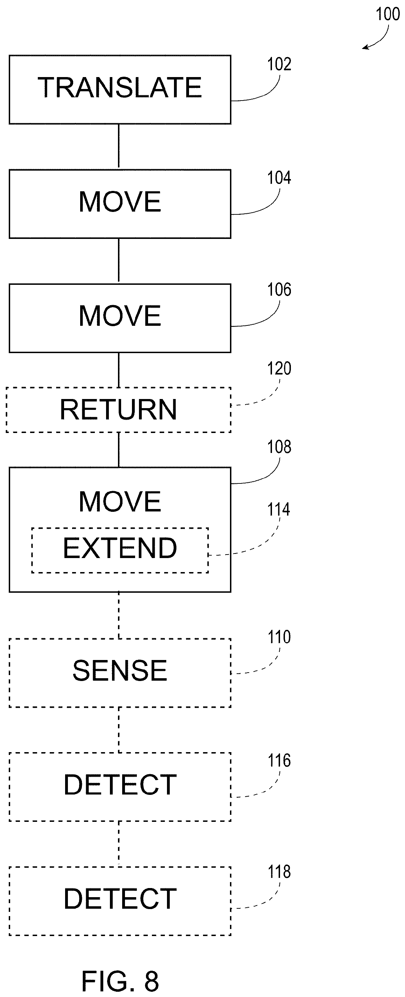

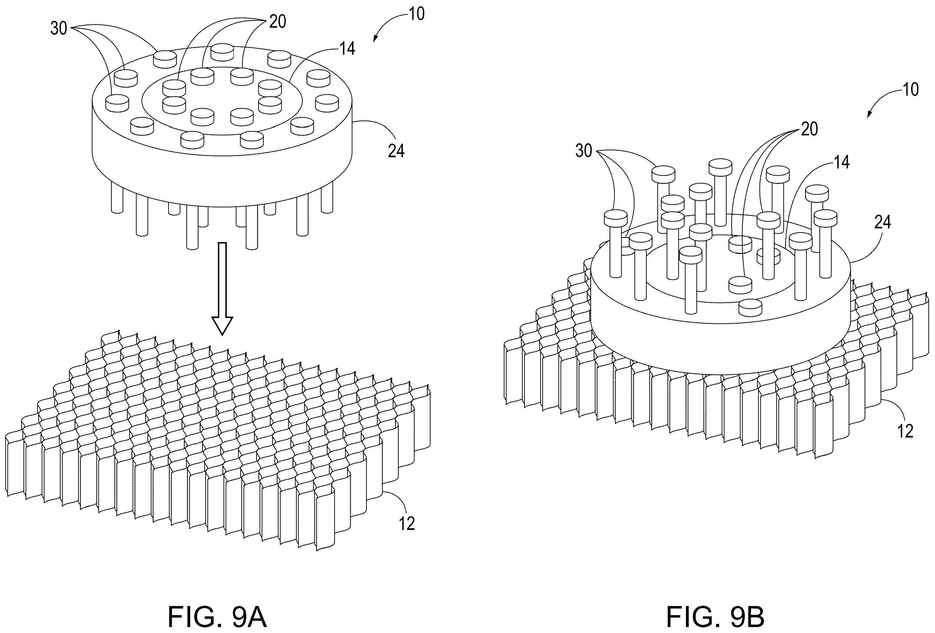

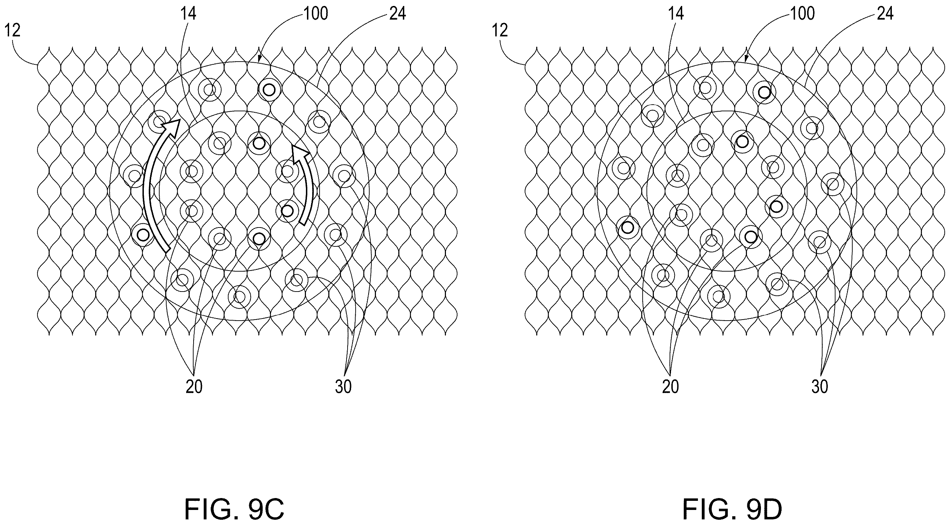

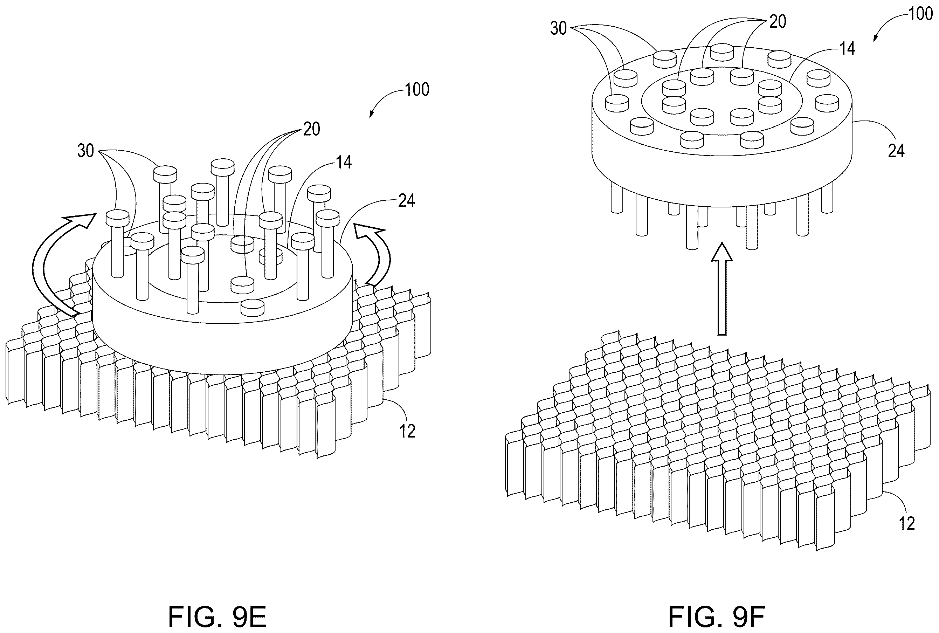

Figs. 8 and 9 schematically represent illustrative, non-exclusive examples of methods 100 according to the present disclosure. Fig. 9 depicts an example sequence of a method 100 utilizing an example system 10. However, the example system 10 illustrated in the sequence of Fig. 9 does not limit methods 100 according to the present disclosure, and any suitable system 10 within the scope of the present disclosure may be used in connection with methods 100. In Fig. 8, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 8 are not limiting and other methods and steps are within the scope of the present disclosure, including methods having greater than or fewer than the number of steps illustrated, as understood from the discussions herein.

With reference to Figs. 1, 8, and 9, methods 100 for picking and placing a honeycomb core 12 utilizing a system 10 comprise translating 102 the system 10 towards the honeycomb core 12 so that at least a first subset of the first pins 20 and at least a second subset of the second pins 30 extend into the cells 68 (see Figs. 9A and 9B). In some methods 100, the honeycomb core 12 is positioned generally on a horizontal surface for initial engagement with the system 10. Accordingly, as discussed herein, insertion of at least a subset of the pins into the cells 68 of the honeycomb core 12 not only relies on the translating 102, but also on gravity.

Methods 100 further comprise moving 104 at least one of the first-pin support 14 and/or the second-pin support 24 relative to the other of the first-pin support 14 and/or the second-pin support 24 to transition the system 10 from a nominal position to an engagement position, so that the first subset of the first pins 20 and the second subset of the second pins 30 engage the cell walls 66, thereby establishing a grip of the honeycomb core 12 with the system 10 (see sequence of Figs. 9C to 9D). Methods 100 further comprise moving 106 the honeycomb core 12 with the system 10. Finally, methods 100 further comprise moving 108 the system 10 so that the first subset of the first pins 20 and the second subset of the second pins 30 retract from the cells 68 (see Fig. 9F).

In some examples, methods 100 further comprise returning 120 the system 10 to the nominal position from the engagement position (see Fig. 9E). In some such examples, the returning 120 occurs prior to the moving 108 (Fig. 9F) so that the first subset of the first pins 20 and the second subset of the second pins 30 retract from the cells 68.

In some examples, the moving 104 comprises linearly moving. In other examples, the moving 104 comprises rotating.

In some examples implemented with systems 10 comprising an actuator 58 and a force sensor 62, methods 100 further comprise sensing 110 a reaction force with the force sensor 62 and then ceasing the moving 104 responsive to the sensing 110.

In some examples implemented with systems 10 comprising an ejector structure 52, the moving 108 comprises extending 114 the ejector structure 52 to the extended position 56 and engaging the honeycomb core 12 with the ejector structure 52.

In some examples implemented with systems 10 comprising a position sensor 64, methods 100 further comprise detecting 116 the position of the system 10 or the robotic system 70 relative to the honeycomb core 12. Accordingly, the moving 106 the honeycomb core 12 with at least one of the system 10 or the robotic system 70 is based at least in part on the detecting 116 position of at least one of the system or the robotic system 70 relative to the honeycomb core 12.

In some examples implemented with robotic systems 70 comprising a force feedback module 74, methods 100 further comprise detecting 118 the force applied to the honeycomb core 12 between the robotic manipulator 72 and a structure 76 against which the honeycomb core 12 is positioned. Accordingly, the moving 106 the honeycomb core 12 with the system 10 or the robotic system 70 is based at least in part on the detecting 118.

Systems 10 and methods 100 may be utilized in a variety of applications and configurations associated with moving honeycomb cores 12. For example, as discussed, a system 10 may be configured to be manually operated, such as in the example system 400 of Fig. 7. One or more operators may manipulate one or more manually operated systems 10 for picking and placing honeycomb core. As also discussed herein, a system may be configured as an end effector 90 of a robotic system. A single robotic manipulator 72 may be utilized in connection with a single end effector 90 for picking and placing honeycomb cores 12 of a suitable size and configuration. In addition, more than one robotic manipulator 72 may be provided with a system 10, with the robotic manipulators 72 working in concert with each other to pick and place honeycomb cores 12, such large or irregularly-shaped honey comb cores 12.

Illustrative, non-exclusive examples of inventive subject matter according to the present disclosure are described in the following enumerated paragraphs:
A. A system for picking and placing a honeycomb core that comprises cell walls that define cells, the system comprising:
   a frame;
   a first-pin support operatively supported by the frame, having a first-pin-support lower side, and defining first-pin bores;
   first pins received within respective ones of the first-pin bores, defining first-pin longitudinal axes that are parallel to each other, sized to extend into respective ones of the cells, and configured to slidably translate within the respective ones of the first-pin bores along the first-pin longitudinal axes between first-pin extended positions, in which the first pins extend from the first-pin-support lower side, and ranges of first-pin retracted positions, in which less of the first pins extend from the first-pin-support lower side, and;
   a second-pin support operatively supported by the frame, having a second-pin-support lower side, and defining second-pin bores; and
   second pins received within respective ones of the second-pin bores, defining second-pin longitudinal axes that are parallel to the first-pin longitudinal axes, sized to extend into respective ones of the cells, and configured to slidably translate within the respective ones of the second-pin bores along the second-pin longitudinal axes between second-pin extended positions, in which the second pins extend from the second-pin-support lower side, and ranges of second-pin retracted positions, in which less of the second pins extend from the second-pin-support lower side ;
   wherein at least one of the first-pin support or the second-pin support is configured to be selectively moved relative to the other of the first-pin support or the second-pin support in one or more directions perpendicular to the first-pin longitudinal axes and the second-pin longitudinal axes.
A1. The system of paragraph A, wherein at least one of the first-pin support or the second-pin support is configured to be selectively and linearly moved relative to the other of the first-pin support or the second-pin support perpendicular to the first-pin longitudinal axes and the second-pin longitudinal axes.
A2. The system of paragraph A, wherein at least one of the first-pin support or the second-pin support is configured to be selectively rotated relative to the other of the first-pin support or the second-pin support about a rotation axis that is parallel to the first-pin longitudinal axes and the second-pin longitudinal axes.
A2.1. The system of paragraph A2, wherein the second-pin support extends at least partially around the first-pin support.
A2.1.1. The system of paragraph A2.1, wherein the second-pin support extends fully around the first-pin support.
A3. The system of any of paragraphs A-A2.1.1, further comprising an actuator supported by the frame and configured to move at least one of the first-pin support or the second-pin support relative to the other of the first-pin support or the second-pin support perpendicular to the first-pin longitudinal axes and the second-pin longitudinal axes.
A3.1. The system of paragraph A3, wherein the actuator is a pneumatic actuator.
A3.2. The system of any of paragraphs A3-A3.1 when dependent from paragraph A1, wherein the actuator is a linear actuator.
A3.3. The system of any of paragraphs A3-A3.1, wherein the actuator is a rotary actuator.
A3.4. The system of any of paragraphs A3-A3.3, further comprising a force sensor operatively supported by the frame and configured to sense a reaction force on the first-pin support and/or on the second-pin support from engagement of a subset of the first pins and/or the second pins with the cell walls, and wherein the actuator is configured to cease movement of the at least one of the first-pin support or the second-pin support relative to the other of the first-pin support or the second-pin support responsive to the reaction force meeting a threshold.
A4. The system of any of paragraphs A-A3.4, wherein the first-pin bores define first-pin slots extending perpendicular to the first-pin longitudinal axes, and wherein the first pins are configured to translate within respective ones of the first-pin slots perpendicular to the first-pin longitudinal axes.
A4.1. The system of paragraph A4, wherein the first pins are laterally biased within the respective ones of the first-pin slots perpendicular to the first-pin longitudinal axes.
A4.1.1. The system of paragraph A4.1, further comprising first-pin springs operatively supported by the first-pin support and configured to bias the first pins in a first direction within the respective ones of the first-pin slots.
A4.1.1.1. The system of paragraph A4.1.1, further comprising first-pin sleeves operatively supported by the first-pin support, wherein the first pins extend through and are configured to slide within respective ones of the first-pin sleeves, and wherein respective ones of the first-pin springs engage the respective ones of the first-pin sleeves.
A5. The system of any of paragraphs A-A4.1.1.1, wherein the second-pin bores define second-pin slots extending perpendicular to the second-pin longitudinal axes, and wherein the second pins are configured to translate within respective ones of the second-pin slots perpendicular to the second-pin longitudinal axes.
A5.1. The system of paragraph A5, wherein the second pins are laterally biased within the respective ones of the second-pin slots perpendicular to the second-pin longitudinal axes.
A5.1.1. The system of paragraph A5.1, further comprising second-pin springs operatively supported by the second-pin support and configured to bias the second pins in a second direction within the respective ones of the second-pin slots.
A5.1.1.1. The system of paragraph A5.1.1 when depending from paragraph A4.1.1, wherein the second direction is opposite the first direction.
A5.1.2. The system of any of paragraphs A5.1-A5.1.1.1, further comprising second-pin sleeves operatively supported by the second-pin support, wherein the second pins extend through and are configured to slide within respective ones of the second-pin sleeves, and wherein respective ones of the second-pin springs engage the respective ones of the second-pin sleeves.
A6. The system of any of paragraphs A-A5.1.2, further comprising an ejector structure operatively supported by the frame and configured to selectively translate parallel to the first-pin longitudinal axes and the second-pin longitudinal axes between a retracted position, in which the ejector structure does not extend beyond the first-pin-support lower side and the second-pin-support lower side, and an extended position, in which the ejector structure extends beyond the first-pin-support lower side and the second-pin-support lower side.
A6.1. The system of paragraph A6 when depending from paragraph A2.1, wherein the ejector structure extends around the second-pin support.
A6.2. The system of any of paragraphs A6-A6.1 wherein the ejector structure is pneumatically actuated.
A7. The system of any of paragraphs A-A6.2, wherein the first pins are not spring-biased along the first-pin longitudinal axes, and wherein the second pins are not spring-biased along the second-pin longitudinal axes.
A8. The system of any of paragraphs A-A7, further comprising a position sensor operatively supported by the frame and configured to detect a position of the system relative to the honeycomb core, wherein the system is configured to be moved relative to the honeycomb core responsive to the position.
A9. The system of any of paragraphs A-A8, further comprising a (second) force sensor operatively supported by the frame and configured to sense a (second) reaction force on the first-pin support and/or on the second-pin support from engagement of honeycomb core, and wherein the system is configured to cease translation toward the honeycomb core respective to the (second) reaction force meeting a (second) threshold.
A10. The system of any of paragraphs A-A9 in combination with the honeycomb core, wherein at least a subset of the first pins and the second pins extend into the cells and engage the cell walls.
A11. A robotic system, comprising:
   a robotic manipulator; and
   the system of any of paragraphs A-A9 operatively coupled to the robotic manipulator.
A11.1. The robotic system of paragraph A11, further comprising a force feedback module operatively coupled to the system and configured to detect and limit a force applied to the honeycomb core between the robotic manipulator and a structure against which the honeycomb core is positioned.
A11.2. The robotic system of any of paragraphs A11-A11.1 in combination with the honeycomb core, wherein at least a subset of the first pins and the second pins extends into the cells and engage the cell walls.
B. A method of picking and placing a honeycomb core utilizing the system of any of paragraphs A-A8 or the robotic system of any of paragraphs A10-A10.1, the method comprising:
   translating the system toward the honeycomb core so that at least a first subset of the first pins and at least a second subset of the second pins extend into the cells;
   moving at least one of the first-pin support and/or the second-pin support relative to the other of the first-pin support and/or the second-pin support to transition the system from a nominal position to an engagement position so that the first subset of the first pins and the second subset of the second pins engage the cell walls, thereby establishing a grip of the honeycomb core with the system; and
   moving the honeycomb core with the system; and
   moving the system so that the first subset of the first pins and the second subset of the second pins retract from the cells.
B1. The method of paragraph B, further comprising:
   returning the system to the nominal position from the engagement position.
B1.1. The method of paragraph B, wherein the returning is performed prior to the moving.
B2. The method of any of paragraphs B-B1.1 when depending from paragraph A1, wherein the moving comprises linearly moving.
B3. The method of any of paragraphs B-B1.1 when depending from paragraph A2, wherein the moving comprises rotating.
B4. The method of any of paragraphs B-B3 when depending from paragraph A3.4, further comprising sensing the reaction force and ceasing the moving responsive to the sensing.
B5. The method of any of paragraphs B-B4 when depending from paragraph A6, wherein the moving comprises extending the ejector structure to the extended position and engaging the honeycomb core with the ejector structure.
B6. The method of any of paragraphs B-B5 when depending from paragraph A8, further comprising detecting the position of the system relative to the honeycomb core, wherein the moving is based at least in part on the detecting.
B7. The method of any of paragraphs B-B6 when depending from paragraph A11.1, further comprising detecting the force applied to the honeycomb core between the robotic manipulator and a structure against which the honeycomb core is positioned, wherein the moving is based at least in part on the detecting.
C. The use of the system of any of paragraphs A-A9 to pick and place the honeycomb core.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A system (10) for picking and placing a honeycomb core (12) that comprises cell walls (66) that define cells (68), the system (10) comprising:
a frame (60);
a first-pin support (14) operatively supported by the frame (60), having a first-pin-support lower side (16), and defining first-pin bores (18);
first pins (20) received within respective ones of the first-pin bores (18), defining first-pin longitudinal axes (22) that are parallel to each other, sized to extend into respective ones of the cells (68), and configured to slidably translate within the respective ones of the first-pin bores (18) along the first-pin longitudinal axes (22) between first-pin extended positions (78), in which the first pins (20) extend from the first-pin-support lower side (16), and ranges of first-pin retracted positions (80), in which less of the first pins (20) extend from the first-pin-support lower side (16), and;
a second-pin support (24) operatively supported by the frame (60), having a second-pin-support lower side (26), and defining second-pin bores (28); and
second pins (30) received within respective ones of the second-pin bores (28), defining second-pin longitudinal axes (32) that are parallel to the first-pin longitudinal axes (22), sized to extend into respective ones of the cells (68), and configured to slidably translate within the respective ones of the second-pin bores (28) along the second-pin longitudinal axes (32) between second-pin extended positions (82), in which the second pins (30) extend from the second-pin-support lower side (26), and ranges of second-pin retracted positions (84), in which less of the second pins (30) extend from the second-pin-support lower side (26);
wherein at least one of the first-pin support (14) or the second-pin support (24) is configured to be selectively moved relative to the other of the first-pin support (14) or the second-pin support (24) in one or more directions perpendicular to the first-pin longitudinal axes (22) and the second-pin longitudinal axes (32);
wherein the first-pin bores (18) define first-pin slots (36) extending perpendicular to the first-pin longitudinal axes (22), wherein the first pins (20) are configured to translate laterally within respective ones of the first-pin slots (36) perpendicular to the first-pin longitudinal axes (22), and wherein the first pins (20) are laterally biased within the respective ones of the first-pin slots (36) perpendicular to the first-pin longitudinal axes (22); and
wherein the second-pin bores (28) define second-pin slots (44) extending perpendicular to the second-pin longitudinal axes (32), wherein the second pins (30) are configured to translate laterally within respective ones of the second-pin slots (44) perpendicular to the second-pin longitudinal axes (32), and wherein the second pins (30) are laterally biased within the respective ones of the second-pin slots (44) perpendicular to the second-pin longitudinal axes (32).

2. The system (10) of claim 1, wherein at least one of the first-pin support (14) or the second-pin support (24) is configured to be selectively and linearly moved relative to the other of the first-pin support (14) or the second-pin support (24) perpendicular to the first-pin longitudinal axes (22) and the second-pin longitudinal axes (32).

3. The system (10) of claim 1, wherein at least one of the first-pin support (14) or the second-pin support (24) is configured to be selectively rotated relative to the other of the first-pin support (14) or the second-pin support (24) about a rotation axis (34) that is parallel to the first-pin longitudinal axes (22) and the second-pin longitudinal axes (32); and optionally
wherein the second-pin support (24) extends at least partially around the first-pin support (14) and further optionally
wherein the second-pin support (24) extends fully around the first-pin support (14).

4. The system (10) of any preceding claim, further comprising an actuator (58) supported by the frame (60) and configured to move at least one of the first-pin support (14) or the second-pin support (24) relative to the other of the first-pin support (14) or the second-pin support (24) perpendicular to the first-pin longitudinal axes (22) and the second-pin longitudinal axes (32).

5. The system (10) of claim 4, further comprising a force sensor (62) operatively supported by the frame (60) and configured to sense a reaction force on the first-pin support (14) and/or on the second-pin support (24) from engagement of a subset of the first pins (20) and/or the second pins (30) with the cell walls (66), and wherein the actuator (58) is configured to cease movement of the at least one of the first-pin support (14) or the second-pin support (24) relative to the other of the first-pin support (14) or the second-pin support (24) responsive to the reaction force meeting a threshold.

6. The system (10) of any preceding claim, further comprising:
first-pin springs (38) operatively supported by the first-pin support (14) and configured to bias the first pins (20) in a first direction within the respective ones of the first-pin slots (36);
first-pin sleeves (42) operatively supported by the first-pin support (14), wherein the first pins (20) extend through and are configured to slide within respective ones of the first-pin sleeves (42), and wherein respective ones of the first-pin springs (38) engage the respective ones of the first-pin sleeves (42);
second-pin springs (46) operatively supported by the second-pin support (24) and configured to bias the second pins (30) in a second direction within the respective ones of the second-pin slots (44), wherein the second direction is opposite the first direction; and
second-pin sleeves (50) operatively supported by the second-pin support (24), wherein the second pins (30) extend through and are configured to slide within respective ones of the second-pin sleeves (50), and wherein respective ones of the second-pin springs (46) engage the respective ones of the second-pin sleeves (50).

7. The system (10) of any preceding claim, further comprising an ejector structure (52) operatively supported by the frame (60) and configured to selectively translate parallel to the first-pin longitudinal axes (22) and the second-pin longitudinal axes (32) between a retracted position (54), in which the ejector structure (52) does not extend beyond the first-pin-support lower side (16) and the second-pin-support lower side (26), and an extended position (56), in which the ejector structure (52) extends beyond the first-pin-support lower side (16) and the second-pin-support lower side (26).

8. The system (10) of any preceding claim, wherein the first pins (20) are not spring-biased along the first-pin longitudinal axes (22), and wherein the second pins (30) are not spring-biased along the second-pin longitudinal axes (32).

9. The system (10) of any preceding claim, further comprising a position sensor (64) operatively supported by the frame (60) and configured to detect a position of the system (10) relative to the honeycomb core (12), wherein the system (10) is configured to be moved relative to the honeycomb core (12) responsive to the position.

10. The system (10) of any preceding claim, further comprising a force sensor (86) operatively supported by the frame (60) and configured to sense a reaction force on the first-pin support (14) and/or on the second-pin support (24) from engagement of honeycomb core (12), and wherein the system (10) is configured to cease translation toward the honeycomb core (12) respective to the reaction force meeting a threshold.

11. The system (10) of any preceding claim in combination with the honeycomb core (12), wherein at least a subset of the first pins (20) and the second pins (30) extend into the cells (68) and engage the cell walls (66).

12. A robotic system (70), comprising:
a robotic manipulator (72); and
the system (10) of any preceding claim operatively coupled to the robotic manipulator (72).

13. The robotic system (70) of claim 11, further comprising a force feedback module (74) operatively coupled to the system (10) and configured to detect and limit a force applied to the honeycomb core (12) between the robotic manipulator (72) and a structure (76) against which the honeycomb core (12) is positioned; or
the robotic system (70) in combination with the honeycomb core (12), wherein at least a subset of the first pins (20) and the second pins (30) extends into the cells (68) and engages the cell walls (66).

14. A method (100) of picking and placing a honeycomb core (12) utilizing the system (10) of any preceding claim, the method (100) comprising:
translating (102) the system (10) toward the honeycomb core (12) so that at least a first subset of the first pins (20) and at least a second subset of the second pins (30) extend into the cells (68);
moving (104) at least one of the first-pin support (14) and/or the second-pin support (24) relative to the other of the first-pin support (14) and/or the second-pin support (24) to transition the system (10) from a nominal position to an engagement position so that the first subset of the first pins (20) and the second subset of the second pins (30) engage the cell walls (66), thereby establishing a grip of the honeycomb core (12) with the system (10); and
moving (106) the honeycomb core (12) with the system (10); and
moving (108) the system (10) so that the first subset of the first pins (20) and the second subset of the second pins (30) retract from the cells (68).

15. The method (100) of claim 13, further comprising:
prior to the moving (108) the system (10), returning (120) the system (10) to the nominal position from the engagement position; and optionally
wherein the moving (104) comprises rotating.
